# EUROPÄISCHE PATENTANMELDUNG

(11) **EP 2 801 585 A1**
(43) Veröffentlichungstag der Anmeldung: **12.11.2014**
(21) Anmeldenummer: 13166690.1
(22) Anmeldetag: 06.05.2013
(51) Int. Cl.: C08G 18/00, C08G 59/40, C08G 101/00, C08K 3/08

(54) **Verdichteter poröser Formkörper basierend auf einem Epoxid-Isocyanat-Harz**

(71) Anmelder: Hüther, Ulrich, 48599 Gronau (DE)
(72) Erfinder: Ulrich Hüther, 48599 Gronau (DE)
(74) Vertreter: Patentanwälte Freischem

(57) **Zusammenfassung**

Die Erfindung betrifft eine Harzzusammensetzung, ein Verfahren zur Herstellung eines ausgehärteten porösen Formkörpers und den porösen Formkörper selbst.

## Beschreibung

Die Erfindung betrifft eine Harzzusammensetzung, ein Verfahren zur Herstellung eines ausgehärteten porösen Formkörpers und den porösen Formkörper selbst.

Viele Formkörper, die aus Harzzusammensetzungen entstehen, haben das Problem, dass sie nicht hinreichend temperaturbeständig und porös sind.

DE 41 41 963 A1 beschreibt eine Harzzusammensetzung.

Die Aufgabe der vorliegenden Erfindung besteht darin, die Nachteile des Standes der Technik zu überwinden.

Die der Erfindung zu Grunde liegende Aufgabe wird in einer ersten Ausführungsform gelöst durch eine Harzzusammensetzung enthaltend
a. 80 bis 98 Gewichtsteile Füllstoffe,
b. 2 bis 20 Gewichtsteile Epoxid-Isocyanat-Harz
c. 0,5 bis 3 Gewichtsteile Härter.

Epoxid-Isocyanat-Harz im Sinne der Erfindung kann ein Harz sein, das in den Patenten EP 0 272 563 B1, EP 0 383 089 B1 oder EP 0 331 996 B1 beschrieben ist.

Vorzugsweise liegt der Anteil an Epoxid-Isocyanat-Harz in einem Bereich von 8 bis 15 Gewichtsteilen.

Vorzugsweise ist der Härter Dimethylbenzylamin.

Vorzugsweise liegt der Anteil an Härter in einem Bereich von 2 bis 3 Gewichtsteilen.

Vorzugsweise liegt die durchschnittliche Partikelgröße der Füllstoffe in einem Bereich von 1 bis 350 µm, besonders bevorzugt in einem Bereich von 1 bis 150 µm. Die durchschnittliche Partikelgröße beträgt vorzugsweise bis zu 65 µm und unabhängig davon wenigstens 1 µm. Die Partikelgröße kann mit einem optischen Mikroskop, beispielsweise durch Auszählung, als arithmetisches Mittel bestimmt werden.

Vorzugsweise liegt der Anteil an Füllstoffen in einem Bereich von 85 bis 92 Gewichtsteilen.

Vorzugsweise handelt es sich bei den Füllstoffen um organische, metallische oder mineralische Partikel.

Vorzugsweise handelt es sich bei den Füllstoffen um Aluminiumpartikel, besonders bevorzugt um Aluminiumsprühgrieß.

Vorzugsweise handelt es sich bei den Füllstoffen um Kohle.

Bei den Füllstoffen kann es sich auch um eine Mischung der vorgenannten Füllstoffe handeln.

Vorzugsweise sind höchstens 5 Gewichtsteile, besonders bevorzugt höchstens 1 Gewichtsteil als weitere Bestandteile enthalten.

In einer weiteren Ausführungsform wird die der Erfindung zu Grunde liegende Aufgabe durch ein Verfahren zur Herstellung eines Formkörpers gelöst, **dadurch gekennzeichnet, dass** die erfindungsgemäße Harzzusammensetzung vermischt wird, in eine Gießform gegeben wird und anschließend in eine Form geschüttet und dort verdichtet wird.

Vorzugsweise werden zunächst der Härter und das Epoxid-Isocyanat-Harz vermischt und erst anschließend die Füllstoffe zugegeben. Besonders bevorzugt werden die Füllstoffe in einem Zwangsmischer zugegeben und anschließend mit den übrigen Bestandteilen vermischt, bis eine homogene Mischung entsteht. Die Zeitdauer der Mischung im Zwangsmischer liegt vorzugsweise in einem Bereich von 2 bis 10 Minuten.

Die Form ist vorzugsweise ausgewählt aus einem Behälter aus Kunststoff, Holz oder Metall.

Die Verdichtung geschieht vorzugsweise durch Verpressen oder Stampfen.

Der Druck bei der Verdichtung, der auf die Zusammensetzung ausgeübt wird, liegt vorzugsweise bei wenigstens 100 kg/cm², insbesondere wenigstens 250 kg/cm².

Vorzugsweise härtet die Zusammensetzung nach der Verdichtung zunächst bei Raumtemperatur aus. Die Zeit dieser Aushärtung kann beispielsweise in einem Bereich von 1 bis 5 Stunden liegen.

Anschließend kann die Aushärtung vorzugsweise im Ofen abgeschlossen werden. Dies kann vorzugsweise stufenweise geschehen. So kann die Temperatur des Ofens stufenweise beispielsweise in 10°C-Schritten erhöht werden. Der Temperaturverlauf kann beispielsweise bei 80°C beginnen und kann beispielsweise bei 180°C aufhören. Anschließend kann der Formkörper beispielsweise langsam im Ofen abgekühlt werden. Vorzugsweise wird der Formkörper vor der endgültigen Aushärtung im Ofen aus der Gießform entnommen.

Vorzugsweise werden die Formkörper anschließend geschliffen und/oder gehobelt.

In einer weiteren Ausführungsform wird die der Erfindung zu Grunde liegende Aufgabe durch einen porösen Formkörper gelöst, hergestellt nach dem erfindungsgemäßen Verfahren, **dadurch gekennzeichnet, dass** es sich um eine poröse Platte oder einen porösen Block handelt.

Vorzugsweise liegt der arithmetische durchschnittliche Porendurchmesser in einem Bereich von 5 bis 50 µm, besonders bevorzugt in einem Bereich von 16 bis 32 µm. Der Porendurchmesser kann im Querschnitt mit einem Lichtmikroskop durch Auszählung bestimmt werden.

Das Porenvolumen des Formkörpers liegt vorzugsweise in einem Bereich von 10 bis 50 Vol.%. Das Porenvolumen kann durch direkte Messung am Luftpyknometer nach LANGER ermittelt werden (DIN 19683 BI. 13).

Der poröse Formkörper enthält vorzugsweise 80 bis 98 Gew.% Füllstoffen.

Der poröse Formkörper enthält vorzugsweise 2 bis 20 Gew.% ausgehärtetes Epoxid-Isocyanat-Harz.

Die Glasübergangstemperatur des porösen Formkörpers liegt vorzugsweise bei wenigstens 300°C.

Die Shore-D Härte des porösen Formkörpers liegt vorzugsweise in einem Bereich von 80 bis 90 (Nadelhärte).

Die Dichte des Formkörpers liegt vorzugsweise in einem Bereich von 1,6 bis 1,9 g/cm³.

Die Dauertemperaturbeständigkeit des porösen Formkörpers liegt vorzugsweise bei wenigstens 200°C.

### Ausführungsbeispiel:

Es wurde eine Harzmenge zusammengestellt:
12 Gewichtsteile Epoxid-Isocyanat-Harz aus Beispiel 1 der EP0331996B1
3 Gewichtsteile Dimethylbenzylamin

Die Harzmenge wurde mit Dimethylbenzylamin gemischt und sorgfältig verrührt. 88 Gewichtsteile Aluminiumsprühgrieß (durchschnittliche Partikelgröße 110 µm) wurden in einen Zwangsmischer gegeben und das vorgemischte Harz zugegeben und ca. 5 Minuten verrührt bis eine homogene Mischung entstanden ist. Die Mischung wurde dann in eine Kiste aus Kunststoff geschüttet und verdichtet. Das Material härtete nach 3 Stunden aus und konnte der Kiste entnommen werden.

Danach wurde die endgültige Aushärtung im Ofen stufenweise von 80°C bis 180°C in Schritten von je 10°C pro Stunde vorgenommen. Die Höchsttemperatur wurde dann über 2 Stunden gehalten. Danach erfolgte die langsame Abkühlung im Ofen. Die Platten oder Blöcke wurden dann geschliffen und gehobelt.

Die in der vorliegenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Harzzusammensetzung enthaltend
a. 80 bis 98 Gewichtsteile Füllstoffe,
b. 2 bis 20 Gewichtsteile Epoxid-Isocyanat-Harz
c. 0,5 bis 3 Gewichtsteile Härter.

2. Harzzusammensetzung gemäß Anspruch 1, **dadurch gekennzeichnet, dass** der Härter Dimethylbenzylamin ist.

3. Harzzusammensetzung gemäß einem der Ansprüche 1 oder 2, **dadurch gekennzeichnet, dass** die durchschnittliche Partikelgröße der Füllstoffe in einem Bereich von 1 bis 350 µm, besonders bevorzugt in einem Bereich von 1 bis 150 µm liegt.

4. Harzzusammensetzung gemäß einem der Ansprüche 1 bis 3, **dadurch gekennzeichnet, dass** es sich bei den Füllstoffen um organische, metallische oder mineralische Partikel handelt.

5. Harzzusammensetzung gemäß einem der Ansprüche 1 bis 4, **dadurch gekennzeichnet, dass** es sich bei den Füllstoffen um Aluminiumpartikel, besonders bevorzugt um Aluminiumsprühgrieß handelt.

6. Harzzusammensetzung gemäß einem der Ansprüche 1 bis 4, **dadurch gekennzeichnet, dass** es sich bei den Füllstoffen um Kohle handelt.

7. Harzzusammensetzung gemäß einem der Ansprüche 1 bis 6, **dadurch gekennzeichnet, dass** höchstens 5 Gewichtsteile als weitere Bestandteile enthalten sind.

8. Verfahren zur Herstellung eines porösen Formkörpers, **dadurch gekennzeichnet, dass** die Harzzusammensetzung aus Anspruch 1 vermischt wird, in eine Gießform gegeben wird und anschließend in eine Form geschüttet und dort verdichtet wird.

9. Poröser Formkörper, hergestellt nach dem Verfahren gemäß Anspruch 8, **dadurch gekennzeichnet, dass** es sich um eine poröse Platte oder einen porösen Block handelt.

10. Poröser Formkörper gemäß Anspruch 9, **dadurch gekennzeichnet, dass** das Porenvolumen des Formkörpers in einem Bereich von 10 bis 50 Vol.% liegt.
